# EUROPEAN PATENT APPLICATION

(11) **EP 2 749 851 A1**
(43) Date of publication of application: **02.07.2014**
(21) Application number: 12825120.4
(22) Date of filing: 05.07.2012
(51) Int. Cl.: G01D 11/28, B60K 37/02

(54) **POINTER-TYPE DISPLAY DEVICE**

(30) Priority: 24.08.2011 JP 2011182084
(71) Applicant: Nippon Seiki Co., Ltd., Niigata 940-8580 (JP)
(72) Inventor: HAMADA,Kazunari, Nagaoka, Niigata (JP); YABE,Sadao, Nagaoka, Niigata (JP); AKIYAMA,Yasushi, Nagaoka, Niigata (JP)
(74) Representative: Carpmaels & Ransford LLP
(86) International application number: PCT/JP2012/067159
(87) International publication number: WO 2013/027497

(57) **Abstract**

Disclosed is a pointer-type display device having a high degree of design freedom, with which a design can be efficiently illuminated. Said device is provided with a light guide letter board (10), a light guide body (20), and a pointer (30), and a first light source (51). The light guide letter board (10) comprises: a transparent light guide section (11) having a letter plate hole section (111) through which a pointer shaft (41) is inserted; a design display section (12) that displays a design and is formed on the front face of the light guide section (11); a first optically transparent emission section (122a) of the design display section (12) that emits light; and an optical diffusion section (13) provided in a position corresponding to this first optically transparent emission section (122a). Light is emitted from the first optically transparent emission section (122a) by means of light-diffusion that is achieved by this optical diffusion section (13). The light guide body (20) causes light to be introduced from the first light source (51) into an inside wall light-introduction section (111a) that is arranged in the inside wall of the letter plate hole section (111).

## Description

### TECHNICAL FIELD

The present invention relates to a pointer-type display device to be installed in an automobile, which illuminates a design display part or the like by guiding light emitted from a light source by a light guide dial.

### BACKGROUND ART

An example of a conventional pointer-type display device has been disclosed in Patent Literature 1. Such a pointer-type display device illuminates a pointer and a front panel (a display panel) by a common light source in order to reduce the number of parts of a light source. In such a pointer-type display device, a reflector (an inside case) having a reflection part and a second reflection part is provided between a front panel and a circuit board, a reflector reflects illumination light from a light source to an outer peripheral side of a display device, and a second reflection part reflects the reflected illumination light to a front panel.

However, in such a pointer-type display device, illumination from behind a display panel is caused by diffused reflection by a reflection part, and it is difficult to uniformly illuminate a display panel. Further, an inside case having a reflection part is provided between a display panel and a circuit board, thereby providing an appropriate space to diffuse light between a display panel and a reflection part. There arises a problem that a degree of design freedom is lowered in component arrangement on a circuit board and configuration of a whole display device.

Patent Literature 2 discloses a pointer-type display device, which comprises a light source that is arranged close to a pointer shaft, and a light guide member that causes light from the light source to be introduced from an annular light incident end face part around a pointer shaft of a pointer, guides the introduced light to the back of a scale plate (a display panel), and uniformly illuminates the display panel from behind. The pointer-type display device guides light from the light source along the pointer shaft, and further guides the light along the display panel, thereby providing a space behind the display panel, and improving a degree of freedom in component arrangement on a circuit board or the like.

### CITATION LIST

### PATENT LITERATURE

Patent Literature 1: Japanese Unexamined Patent Application Publication No. 2001-99685
Patent Literature 2: Japanese Unexamined Patent Application Publication No. 2003-270003

### SUMMARY OF THE INVENTION

### PROBLEMS TO BE SOLVED BY THE INVENTION

The pointer-type display device disclosed in Patent Literature 2 is configured to uniformly illuminate a whole dislay panel without considering a design display part provided in a display panel, and is not able to efficiently illuminate a design when illuminating a predetermined design.

The present invention has been made to solve the above problems. Accordingly, it is an object of the present invention to provide a pointer-type display device having a high degree of design freedom while efficiently illuminating a design.

### MEANS FOR SOLVING THE PROBLEM

The present invention uses the following means to solve the above problems.

According to the present invention, there is provided a pointer-type display device comprising:
a light source; a pointer; and
a light guide dial comprising a translucent light guide part having a dial hole part for inserting a pointer shaft; a design display part for displaying a design, which is formed on a surface of the light guide part; a first light transmissive emission part of the design display part for emitting light; and a light diffusion part that is provided at a position corresponding to the first light transmissive emission part, and emits light from the first light transmissive emission part by light diffusion achieved by the light diffusion part,
wherein a light guide body, which causes light to be introduced from the light source into an inside wall light introduction part disposed in an inside wall of the dial hole part, is provided.

In order to solve the above problems, according to a first aspect of the invention, there is provided a pointer-type display device comprising:
a pointer;
a first light source arranged around the pointer; and
a light guide dial comprising a translucent light guide part, which is provided with a dial hole part for inserting a shaft of the pointer, and guides light of the first light source; a design display part that displays a design on at least one of a front surface and a rear surface of the light guide part; and a light diffusion part, which is formed on at least one of a front surface and a rear surface of the light guide part, and diffuses light guided by the light guide part; the design display part provided with a first light transmissive emission part that transmits and emits light diffused by the light diffusion part, and the light diffusion part is provided corresponding to the first light transmissive emission part,
wherein a light guide body, which causes light to be introduced from the first light source into an inside wall light introduction part disposed in an inside wall of the dial hole part of the light guide dial, is provided.

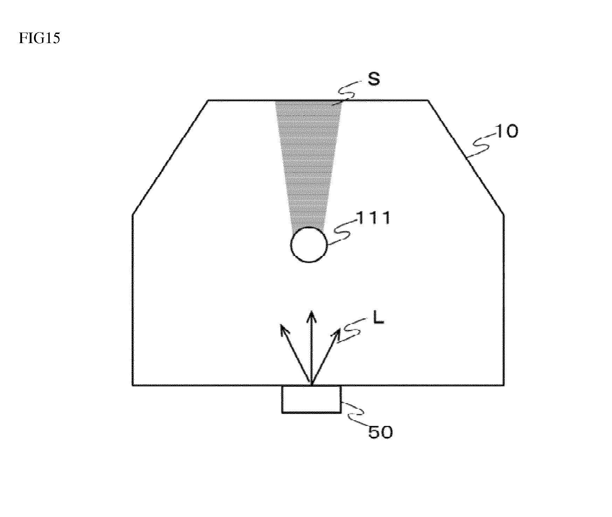

As described above, the light guide body causes light to be introduced from the first light source into the inside wall light introduction part of the light guide dial, and the light of the first light source is taken into the light guide part of the light guide dial radially around the dial hole part. The light taken into the light guide part travels in the light guide part, diffuses in the light diffusion part provided at a position corresponding to the first light transmissive emission part, and exits from the first light transmissive emission part, thereby preventing or suppressing emission of light from an unnecessary part of the light guide dial, and efficiently illuminating a design displayed in the design display part. Further, the light of the first light source is taken into the light guide part of the light guide dial radially around the dial hole part, suppressing light leakage from the dial hole part or luminance variations of the light guide dial caused by a dark hole portion S of the dial hole part, compared with a case of taking into light from a position other than the dial hole part (refer to Fig. 15). Further, as the light of the first light source is guided along the pointer shaft, and the light emitted from the light guide body is guided along the light guide dial, a large space can be provided between the light guide dial and the circuit board, and the space behind the light guide dial can improve a degree of design freedom such as component arrangement on the circuit board.

In a second aspect of the invention, the light guide body is provided with a dial direction emission part that emits light from the first light source and that opposed substantially parallel to the inside wall light introduction part. A thickness of the dial direction emission part that is a height direction of the light guide body is substantially the same as a thickness of the inside wall light introduction part. In such a configuration, it is possible to suppress light leakage when light is transmitted from the light guide body to inside of the light guide dial, and a design can be efficiently illuminated.

In a third aspect of the invention, the light guide body is provided with a pointer shaft insertion part for inserting a shaft of the pointer, and the dial direction emission part is arranged opposite to substantially entire circumference of the inside wall light introduction part. Being provided with a pointer shaft insertion part for inserting a pointer shaft as described above, the dial direction emission part can be provided in substantially all directions, light of the light source can be emitted in substantially all directions of the light guide dial around the dial hole part, and a design can be efficiently illuminated in a wider range.

In a fourth aspect of the invention, the light guide body is provided with a dial direction reflection part that reflects light from the first light source to the direction of the dial direction emission part, and a pointer direction emission part that emits the light to the direction of the pointer. In such a configuration, it is possible to share the light source for illuminating the light pointer and the light guide dial, enabling efficient illumination with a less light source.

In a fifth aspect of the invention, the dial direction emission part is provided with a dial direction diffusion part for diffusing light. In such a configuration, it is possible to emit light radially and more uniformly from the dial direction emission part of the light guide body to the inside wall light introduction part of the light guide dial.

In a sixth aspect of the invention, the light guide plate direction diffusion part is formed by a V-shaped groove. In such a configuration, it is possible to emit light radially and more uniformly from the dial direction emission part of the light guide body to the inside wall light introduction part of the light guide dial.

In a seventh aspect of the invention, there are further provided with a second light source, and a second light transmissive emission part, which is provided in an area of the light guide dial except the dial hole part, and transmits and emits light emitted from the second light source from a rear surface side of the light guide dial to a front surface side of the light guide dial. The second light source is provided on a rear surface side of the light guide dial, opposite to the second light transmissive emission part. Being provided with a light source independent of a light source for illuminating the light guide dial, a predetermined design display part can independently turned on/off.

In an eighth aspect of the invention, a pointer-type display device comprises a pointer; a first light source arranged around the pointer; a third light source that illuminates the pointer from behind; and a light guide dial comprising a translucent light guide part, which is provided with a dial hole part for inserting a shaft of the pointer, and guides light of the first light source; a design display part that displays a design on at least one of a front surface and a rear surface of the light guide part, and a light diffusion part, which is formed on at least one of a front surface and a rear surface of the light guide part, and diffuses light guided by the light guide part; the design display part provided with a first light transmissive emission part that transmits and emits light diffused by the light diffusion part, and the light diffusion part provided with a light guide dial that is provided corresponding to the first light transmissive emission part, a light guide body, which to be introduced light from the first light source into an inside wall introduction part disposed in an inside wall of the dial hole part of the light guide dial, a partition wall part that separates the third light source from the first light source and the light guide body, and an upper wall part that covers an upper side of the light guide body. In such a configuration, in addition to the effect of the first aspect of the invention, it is possible to perform elaborate illumination by independently driving illuminations of the pointer and the light guide dial.

In a ninth aspect of the invention, the light guide body is provided with a dial direction emission part that emits light from the first light source and that opposed substantially parallel to the inside wall light introduction part. A thickness of the dial direction emission part that is a height direction of the light guide body is substantially the same as a thickness of the inside wall light introduction part. In such a configuration, it is possible to suppress light leakage when light is transmitted from the light guide body to inside of the light guide dial, and a design can be efficiently illuminated.

In a tenth aspect of the invention, the light guide body is provided with a pointer shaft insertion part for inserting a shaft of the pointer and the partition wall part, and the dial direction emission part is arranged opposite to substantially entire circumference of the inside wall light introduction part. In such a configuration, the dial direction emission part can be provided in substantially all directions, light of the light source can be emitted in substantially all directions of the light guide dial around the dial hole part, and a design can be efficiently illuminated in a wider range.

In an eleventh aspect of the invention, there are further provided with a second light source, and a second light transmissive emission part, which is provided in an area of the light guide dial except the dial hole part, and transmits and emits light emitted from the second light source from a rear surface side of the light guide dial to a front surface side of the light guide dial. The second light source is provided on a rear surface side of the light guide dial, opposite to the second light transmissive emission part. Being provided with a light source independent of a light source for illuminating the light guide dial, a predetermined design display part can be independently turned on/off.

### EFFECT OF THE INVENTION

To provide a pointer-type display device having a high degree of design freedom while efficiently illuminating a design.

### BRIEF DESCRIPTION OF THE DRAWINGS

[Fig. 1] Fig. 1 is a perspective view of a pointer-type display device in an embodiment of the invention.
[Fig. 2] Fig. 2 is a sectional view of a pointer-type display device in an embodiment of the invention.
[Fig. 3] Fig. 3 is a configuration diagram of a light guide dial in an embodiment of the invention.
[Fig. 4] Fig. 4 shows display examples of a light guide dial in an embodiment of the invention, (a) showing a front view of the light guide dial, (b) showing a magnified view of a part B of the front of the light guide dial, (c) showing a sectional view of the light guide dial and a circuit board, and (d) showing a state of the light guide dial being illuminated.
[Fig. 5] Fig. 5 shows display examples of a light guide dial in an embodiment of the invention, (a) showing a front view of the light guide dial, (b) showing a magnified view of a part C of the front of the light guide dial, (c) showing a sectional view of the light guide dial, and (d) showing a state of the light guide dial being illuminated.
[Fig. 6] Fig. 6 shows display examples of a light guide dial in an embodiment of the invention, (a) showing a front view of the light guide dial, (b) showing a magnified view of a part D of the front of the light guide dial, (c) showing a sectional view of the light guide dial, and (d) showing a state of the light guide dial being illuminated
[Fig. 7] Fig. 7 is a detailed view of an area around a light guide body in an embodiment of the invention, which is a magnified view of Fig. 2.
[Fig. 8] Fig. 8 shows a light guide body in an embodiment of the invention, (a) showing a perspective view of the light guide body, (b) showing a sectional view of the light guide body, and (c) to (f) showing modification examples of a dial direction reflection part.
[Fig. 9] Fig. 9 shows modification examples of a pointer shaft insertion part of a light guide body in an embodiment of the invention, (a) showing an example of a pointer shaft insertion part provided by offsetting from a center point of the light guide body, (b) showing an example of a pointer shaft insertion part not provided in an entire circumference.
[Fig. 10] Fig. 10 shows examples of a light diffusion part provided in a light guide body in an embodiment of the invention, (a) and (b) showing examples of a reflection surface diffusion part provided in a dial direction reflection part, and (c) and (d) showing examples of an emission surface diffusion part provided in a dial direction emission part.
[Fig. 11] Fig. 11 shows modification examples of a light guide dial in an embodiment of the invention.
[Fig. 12] Fig. 12 shows modification examples of a light guide dial in an embodiment of the invention.
[Fig. 13] Fig. 13 shows display examples of a pointer-type display device in an embodiment of the invention, (a) showing a front view, and (b) showing a sectional view.
[Fig. 14] Fig. 14 shows a second embodiment of a pointer-type display device in an embodiment of the invention, (a) showing a sectional view, and (b) showing a detailed view.
[Fig. 15] Fig. 15 shows a state of a light guide dial being illuminated from an end portion.

### MODES FOR CARRYING OUT THE INVENTION

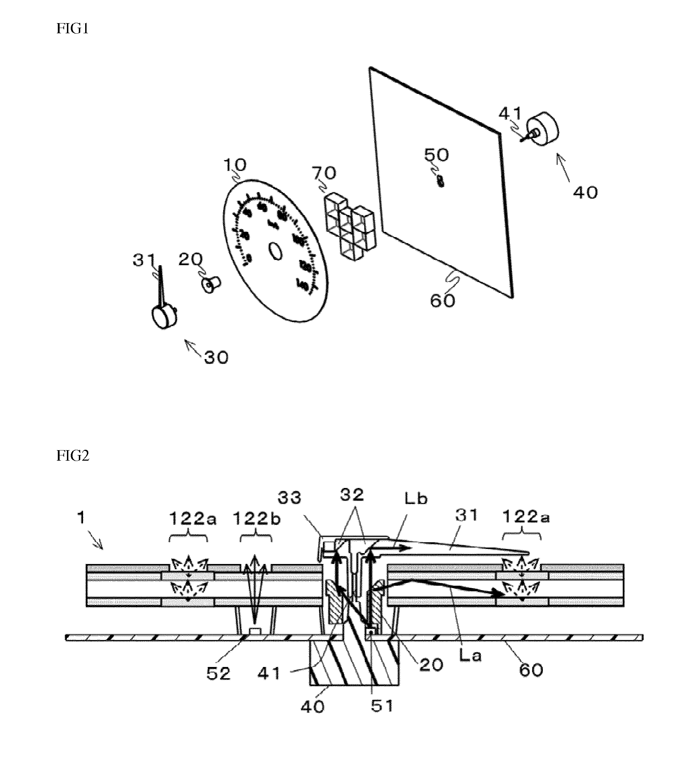

Hereinafter, embodiments of a pointer-type display device 1 of the present invention will be described with reference to the accompanying drawings. Fig. 1 is a perspective view of a pointer-type display device in an embodiment of the invention. A pointer-type display device 1 of the invention comprises a light guide dial 10, a light guide body 20, a pointer 30, a main body 40, a light source 50, a circuit board 60, and an inside case 70. The pointer is moved based on a vehicle signal indicating vehicle information such as a vehicle speed and engine speed outputted from a vehicle. The light guide dial and pointer are lightened by light from the light source.

### (Light guide dial)

First, an explanation will be given to the light guide dial 10 of the pointer-type display device 1 of the invention.

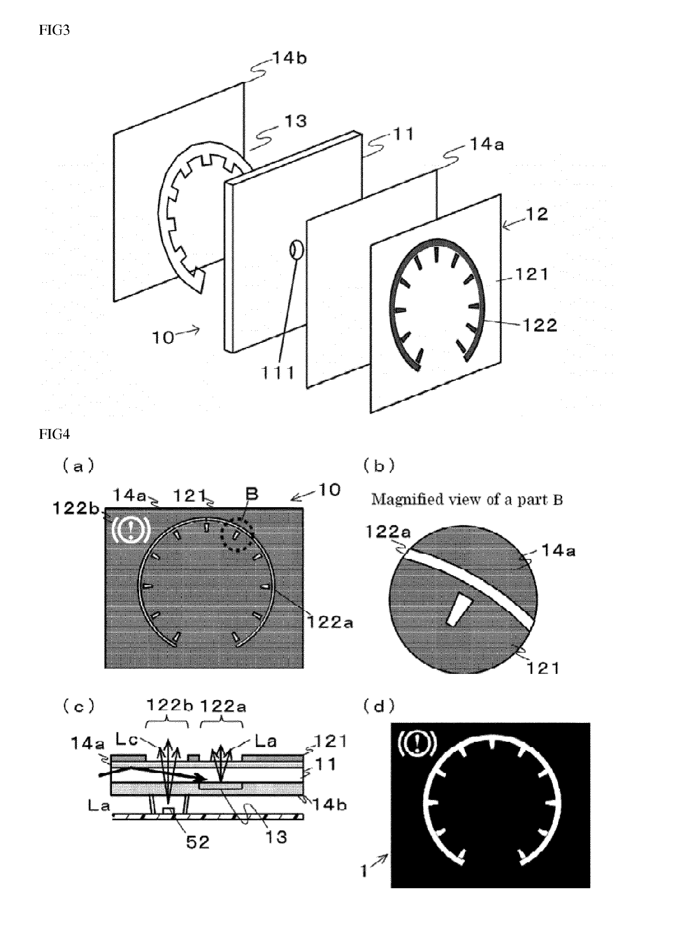

As shown in Fig. 3, the light guide dial 10 comprises a translucent light guide part 11, a design display part 12 that displays a design on a front surface of the light guide part 11, a light diffusion part 13 for diffusing light, a front low refractive index part 14a that covers a front surface of the light guide part 11, and a rear low refractive index part 14b that covers a rear surface of the light guide part 11.

The light guide part 11 is a plate-shaped member made of translucent material, and has a dial hole part 111 that is a through-hole with a diameter smaller than that of a pointer cap 33 of a pointer 30 for inserting a pointer shaft 41 described later. Here, the light guide part is made of transparent or semi-transparent (including semi-light-transmissive) synthetic resin member (e.g., polycarbonate plate). An inside wall of the dial hole part 111 is provided with an inside wall light introduction part 111a, and takes light from the inside wall light introduction part 111a into the light guide part 11. The light guide part 11 causes light to be introduced from the inside wall light introduction part 111a, and transmits the light to a wide range.

The design display part 12 is a display layer that is formed on a front surface or a rear surface of the light guide part 11 by printing or paining using ink, for example, for displaying a design (characters, pictures, graphics, symbols, and the like). The design display part comprises a non-light-transmitting (light-shielding) non-transmissive part121, and a transmissive part 122 that transmits and emits light.

The non-transmissive part 121 is a solid-filled area except a scale shape in Fig. 4(a), which is formed by printing or painting using light-shielding ink or the like, and forms a design by cutting out a part of a design (characters, pictures, graphics, symbols, and the like) of an instrument for a vehicle.

The transmissive part 122 is, as shown in Fig. 4 (c), divided into a first light transmissive emission part 122a that emits light La in the light guide dial 10, and a second light transmissive emission part 122b that transmits and emits light Lc of a second light source 52 located behind the light guide dial 10.

The first light transmissive emission part 122a emits the light La in the light guide dial 10 diffused by a light diffusion part 13 described later. The second light transmissive emission part 122b emits the light Lc emitted from the second light source 52 located behind the light guide dial 10. As the light Lc emitted from the second light source 52 is directly emitted without being diffused or reflected, luminous light is emitted shining bright, attracting user's eyes.

The transmissive part 122 is a part of a design of a vehicle instrument that is cut out in the non-transmissive part 121. Here, the transmissive part 122 is formed by cutout picture printing or the like.

Further, the transmissive part 122 may be any part as long as transmitting light diffused by the light diffusion part 13 described later, and may be formed by white printing or the like having light transmissivity.

The light diffusion part 13 is formed on a rear surface of the light guide part 11 by printing or paining using material having light diffusion property, and diffuses light guided by the light guide part 11. The light diffusion part 13 is provided at a position corresponding to the first light transmissive emission part 122a, so as to overlap with all parts of the first light transmissive emission part 122a, as shown in Fig. 4.

The front low refractive index part 14a and rear low refractive index part 14b are provided holding the light guide part 11 so as to cover both sides of the light guide part 11 (as appropriate, including the light diffusion part 13). The front low refractive index part 14a and rear low refractive index part 14b are formed by printing or painting using transparent or semi-transparent translucent (including semi-translucent) synthetic resin having a refractivity lower than that of the light guide part 11.

Further, the front low refractive index part 14a and rear low refractive index part 14b may be provided by a plate-shaped synthetic resin member (e.g., an acrylic plate or the like) having light transmissivity.

Specifically, the front low refractive index part 14a and rear low refractive index part 14b are made of acrylic resin (a refractive index of light is appropriately 1.49), silicon resin (a refractive index of light is appropriately 1.5), polytetrafluoroethylene or tetrafluoroethylene (a type of polyethylene, a refractive index of light is approximately 1.35). The front low refractive index part 14a and rear low refractive index part 14b may be made of different materials.

Light guided by the light guide part 11 is totally reflected at an interface between the light guide part 11 and the front low refractive index part 14a or rear low refractive index part 14b. Total reflection means a symptom that when light is going to enter from a high refractive index medium (the light guide part 11) into a low refractive index medium (the low refractive index parts 14a and 14b), the incident light is not passed through an interface, and is totally reflected (as appropriate, including substantially total). Total reflection occurs when an incident angle of light is larger than an angle (a critical angel) determined by refractive indexes of adjacent media (here, the light guide part 11, the front low refractive index part 14a, and the rear low refractive index part 14b). Light incident from a side of the light guide part 11 mostly reaches the front low refractive index part 14a or the rear low refractive index part 14b at an incident angle larger than a critical angle, and the light reaching the interface between the light guide part 11 and the low refractive index part 14 is totally reflected.

A process from entry to exit of light of the light guide dial 10 configured as explained above will be described in detail with reference to Figs. 2 and 4. Light La emitted from the dial direction emission part 24 of the light guide body 20 enters into the inside wall light introduction part 111a of the dial hole part 111 of the light guide dial 10. The light La entered into the inside wall light introduction part 111a repeats total reflection at the interface between the light guide part 11 and the front low refractive index part 14a or between the light guide part 11 and the rear low refractive index part 14b, and travels in the light guide part 11. A part of the light traveling in the light guide part 11 reaches the light diffusion part 13. The light La arrived at the light diffusion part 13 is diffused by the light diffusion part 13. Of the light La diffused by the light diffusion part 13, light whose angle of incidence to the surface of the light guide part 11 is smaller than a critical angle is not totally reflected, and is passed through the first light transmissive emission part 122 of the design display part 12 via the front low refractive index part 14a. Thus, as shown in Fig. 4, light is emitted from the first light transmissive emission part 122a (here, a scale portion of a speed meter) of the design display part 12. Thus, the non-transmissive part 121 seems dark, and the first light transmissive emission part 122a sees bright.

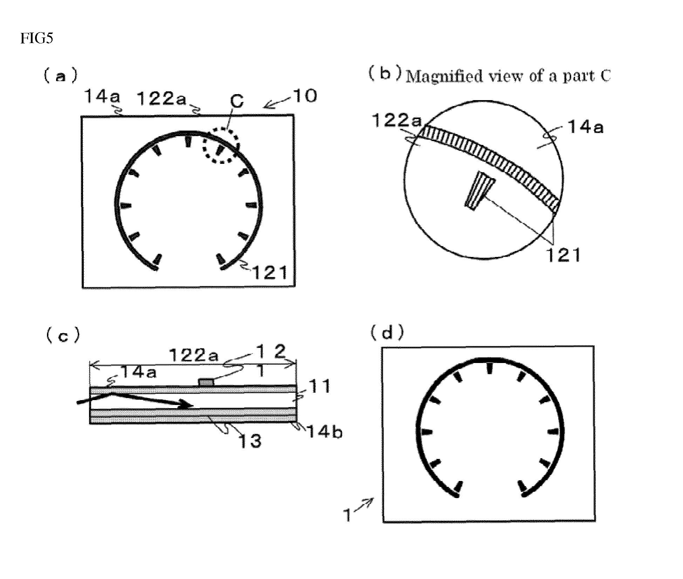

In the above specific example, a design is lightened and recognized by emitting light from the first light transmissive emission part 122a that is a cutout portion of the non-transmissive part 121. However, as shown in Fig. 5, a design may be recognized by lightening an area other than a design by arranging the non-transmissive part 121 having a shape of a design in an area of the first light transmissive emission part 122a.

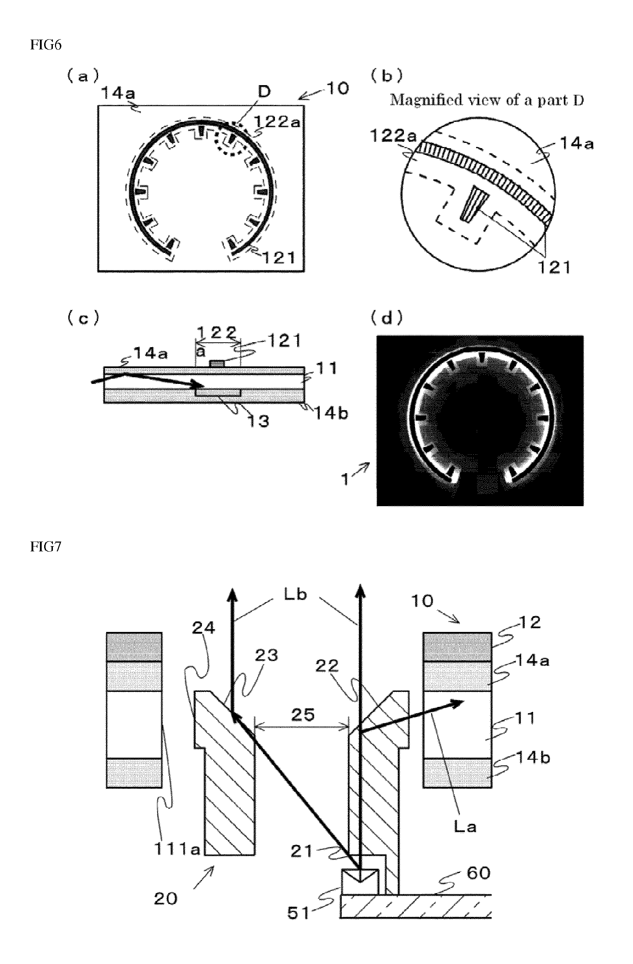

Further, by using the techniques shown in Figs. 4 and 5, as shown in Fig. 6, an elaborate design can be displayed by providing the non-transmissive part 121 in an inside area of the light transmissive emission part 122a.

The above is a configuration of the light guide dial 10 according to the embodiment. As the light guide dial 10 is provided with the light diffusion part 13 corresponding to the first light transmissive emission part 122a in the design display part 12, the light La diffused by the light diffusion part 13 is passed through and emitted from the first light transmissive emission part 122a.

### (Light guide body)

Next, the light guide body 20 will be explained with reference to Fig. 7 to Fig. 10.

Fig. 7 is a magnified view of an area around the light guide body 20, and a magnified view of Fig. 2.

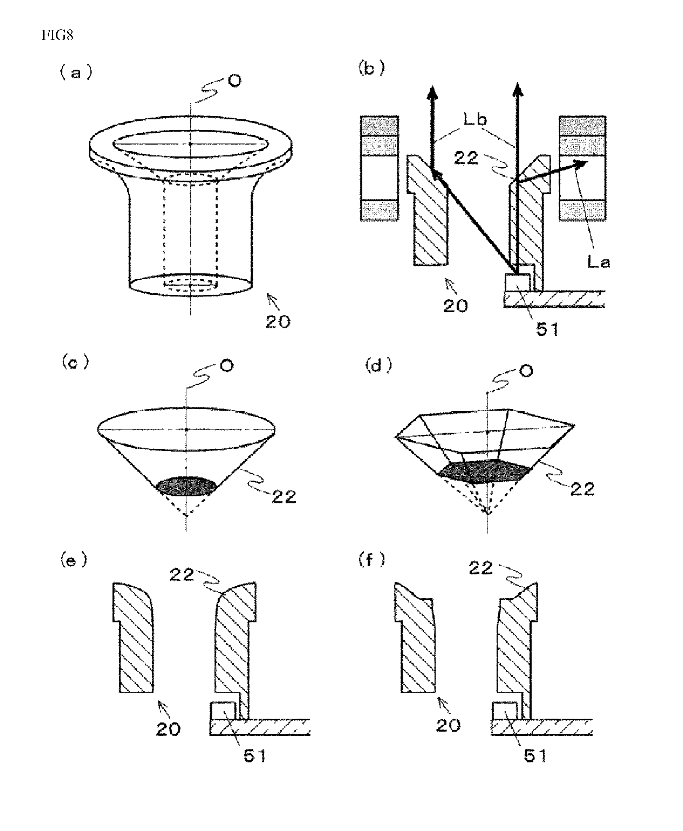

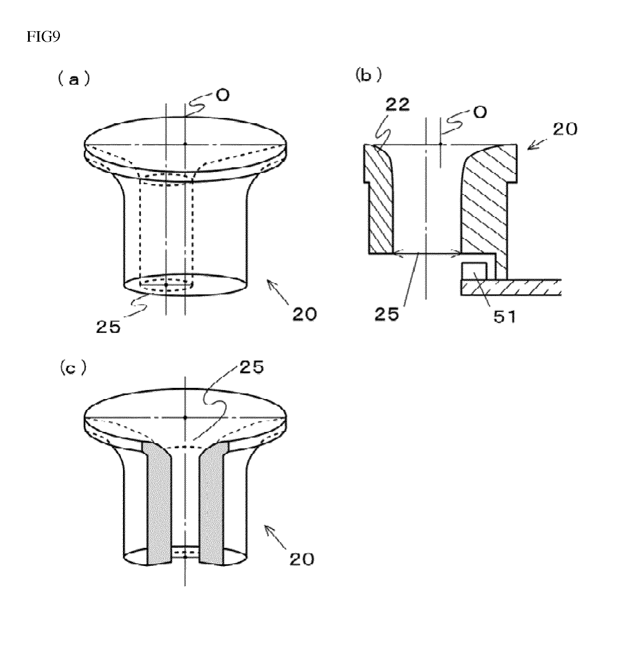

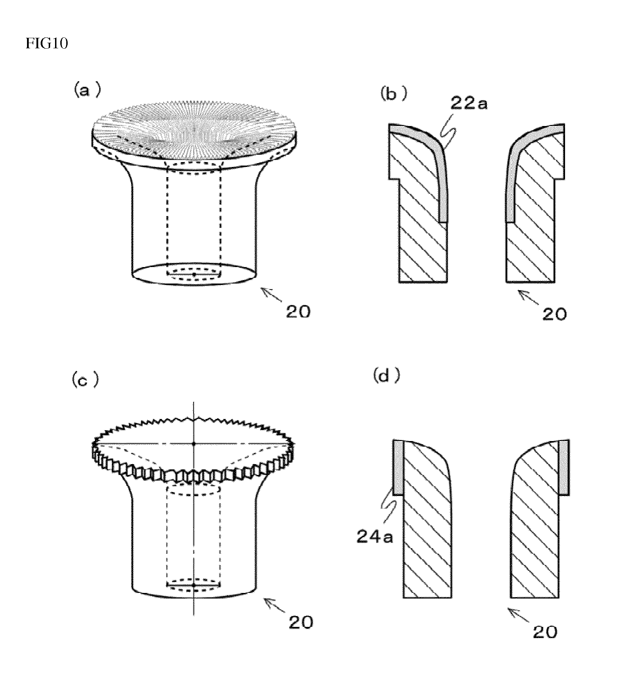

Fig. 8 shows modification examples of a shape of the light guide body 20. Fig. 9 shows modification examples of the pointer shaft insertion part 25 of the light guide body 20. Fig. 10 shows modification examples of the light guide body 20 having a light diffusion part on its surface.

The light guide body 20 comprises a housing part 21 that houses a first light source 51 described later, a dial direction reflection part 22 that reflects light L of the first light source 51 to the direction of the inside wall light introduction part 111a of the light guide dial 10, a pointer direction emission part 23 that emits light Lb to the direction of the pointer 30, a dial direction emission part 24 that emits light La to the inside wall light introduction part 111a of the light guide dial 10, and a pointer shaft insertion part 25 for inserting a pointer shaft 41 described later. The light guide body guides the light L of the first light source 51 to the light guide dial 10 and the pointer 30. In the diagrams showing embodiments of the invention, light emitted from the first light source is indicated by light L. Out of the light L, light guided to the direction of the light guide dial 10 by the light guide body 20 is indicated by light La, and light guided to the direction of the pointer 30 by the light guide body 20 is indicated as light Lb.

The housing part 21 covers (houses) the first light source 51 at a desired position, and takes more light into the light guide body 20 without missing light L emitted from the first light source 51.

The dial direction reflection part 22 is, as shown in Fig. 8 (c), formed in a conical surface shape around a center O of the light guide body 20, and reflects the light L entering from the housing part 21 to the direction of the pointer direction emission part 23. In the embodiment, the dial direction reflection part 22 is provided in substantially all directions around the center O of the light guide body 20. However, it is possible to appropriately limit an area to provide the dial direction reflection part 22 depending on an area desired to reflect light.

Further, the dial direction reflection part 22 is, as shown in Fig. 6 (d), may be formed in a pyramid-shaped surface (hexagonal cone surface, octagonal cone surface, etc.), a curved-shaped as shown in Fig. 6(e), or may be provided with a projection as shown in Fig.6(f).

The pointer direction emission part 23 is a part where an angle of light L guided in the light guide body 20, of the dial direction reflection part 22, entered into the dial direction reflection part 22 is lower than a clinical angle, and light Lb is emitted to the direction of the pointer 30. The amount of the light Lb emitted from the pointer direction emission part 23 to the direction of the pointer 30 is appropriately adjusted by a shape of the dial direction emission part 24 described later.

The dial direction emission part 24 is a part which is arranged substantially parallel to a surface of the inside wall light introduction part 111a provided in an inside wall of the dial hole part 111 of the light guide dial 10, and emits light La reflected by the dial direction reflection part 22 to the inside wall light introduction part 111a. A thickness of the dial direction emission part 24, that is a height direction of the light guide body 20, is formed to be substatially the same as that of the inside wall introduction part 111a. In such a configuration, it is possible to suppress light leakage when light is transmitted from the light guide body to the light guide dial, and a design can be efficiently illuminated.

The pointer shaft insertion part 25 is a part for inserting a pointer shaft 41 described later, and is provided as a through-hole at the center O of the light guide body 10. In such a configuration, the dial direction emission part can be provided in substantially all directions, light of the light source can be emitted in substantially all directions of the light guide dial around the dial hole part, and a design can be efficiently illuminated in a wider range.

Further, the pointer shaft insertion part 25 may be provided not around the center O of the light guide body 10, but at a position offset from the center O of the light guide body 10 as shown in Fig. 9 (a) and (b).

Further, the pointer shaft insertion part 25 may not cover the entire circumference of the pointer shaft 41 as shown in Fig. 9 (c).

As shown in Figs. 10 (a) and (b), the dial direction reflection part 22 may be provided with a reflection surface diffusion part 22a formed by a V-shaped groove or the like on its surface. A reflection surface diffusion part may be provided in the dial direction reflection part 22 by printing or painting using a material having a light diffusion property.

Further, as shown in Figs. 10 (c) and (d), the dial direction emission part 24 may be provided with an emission surface diffusion part 24a formed by a V-shaped groove or the like on its surface. An emission surface diffusion part may be provided in the dial direction emission part 24 by printing or painting using a material having a light diffusion property.

With such a reflection surface diffusion part 22a, it is possible to emit uniform light Lb to the direction of the pointer 10. Or, it is possible to emit uniform light La to the inside wall light introduction part 111a by the emission surface diffusion part 24a.

The pointer 30 comprises a pointing portion 31, a pointer base portion 32, and a pointer cap 33, as shown in Fig. 2. The pointing portion 31 points an index of the light guide dial 10, and is lightened by receiving light Lb from the light source 50. The pointer base portion 32 is fixed to the pointer shaft 41 provided in a drive main body 4. The pointer base portion 32 is made of transparent resin integrally with the pointing portion 21. The pointer cap 33 is made of light-shielding synthetic resin, and provided so as to cover the pointer base portion 32.

The main body 40 is mounted on the circuit board 6, and is provided with the pointer shaft 41 for fitting the pointer 2. The pointer shaft 41 is located and penetrated at a substantially center of the dial hole part 111 of the light guide dial, and its front end portion is projected upward from a display surface of the light guide dial 10.

The light source 50 is mounted on the circuit board 60, and formed in a top-view type that emits light in a direction perpendicular to the circuit board 60. The light source 50 comprises a first light source 51 that emits light L to the light guide body 20, and a second light source 52 that illuminates the second light transmissive emission part 122b from behinde the light guide dial 10.

The circuit board 60 is configured to mount the light source 50 and main body 40, and to electricaly control the pointer-type display device.

The inside case 70 is disposed between the light guide dial 10 and the circuit board 60, and is provided with a first partition part 71 that separates the first light source 51 and the light guide body 20, and a second partition part 72 that separates the second light source 52.

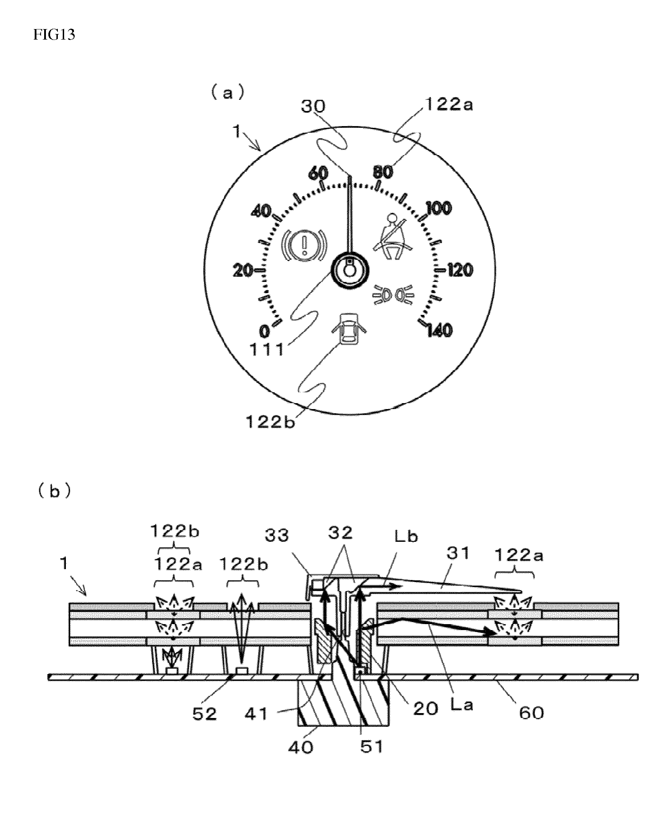

The first partition part 71 reflects light L again to the direction of the light guide body 20 without leaking to outside of the first partition part 71, when the light L of the first light source 51 entering into the light guide body 20 excits from a surface other than the pointer direction emission part 23 and dial direction emission part 24 of the light guide body 20. The second partition part 72 reflects light Lc of the second light source 52 to the direction of the second light transmissive emission part 122b without leaking to outside of the second partition part 72. By providing the second partition part 72 as described above, the second light transmissive emission part 122b can be independently turned on/off regardless of the lighting timing of the first light source 51. It is possible to dispose the second light transmissive emission part 122b, which can be independently turned on/off, in any area except the dial hole part 111 that causes light to be introduced into the light guide dial 10, as shown in Fig. 13.

The second light transmissive emission part 122b, second light source 52, and second partitionpart 72 may be provided in an area overlapping with the first light transmissive emission part 122a, except the area of the dial hole part 111.

In the pointer-type display device 1 configured as described above, as shown in Fig. 2,
(1) Light L of the first light source 51 disposed around the pointer shaft 41 enters into the light guide body 20 having the pointer shaft insertion part 25 for inserting the pointer shaft 41, and is guided to the direction substantially parallel to the pointer shaft 41 by the light guide body 20.
(2) The guided light L is reflected to the direction of the pointer direction emission part 23 as light La by the dial direction reflection part 22. Of the light L, light entered into the dial direction reflection part 22 at an angle lower thanacritical angle is emitted to the direction of the pointer 30 as light Lb by the pointer direction emission part 23.
(3) The pointer direction emission part 23 and the inside wall light introduction part 111a of the light guide dial 10 are disposed substantially parallel, and formed to have substantially the same thickness. Light La reflected by the dial direction reflection part 22 is emitted from the pointer direction emission part 23, and entered into the inside wall light introduction part 111a.
(4) The light La entered into the inside wall light introduction part 111a travels in the light guide part 11 by total reflection, and is diffused by the light diffusion part 13 that is provided corresponding to the first light transmissive emission part 122a. The diffused light La is emitted from the first light transmissive emission part 122a, and the first light transmissive emission part 122a is lightened and recognized.

In the pointer-type display device 1 of the embodiment, the light L from the first light source 51 that illuminates the light guide dial 10 is guided around the pointer shaft 41 substantially prallel to the pointer shaft 41 (substantially vertical to the circuit board 60), and the light La illuminating the light guide dial 10 is guided along the light guide dial 10. Thus, a large space can be provided between the circuit board 60 and the light guide dial 10 except the dial hole part 111 for introducing light into the light guide dial 10, and components of the circuit board 60 and the inside case 70 can be freely arranged, improving a degree of design freedom.

Further, as the light diffusion part 13 is provided in an area corresponding to the first light transmissive emission part 122a that is provided as an area for actually transmitting light in the design display part 12, light diffused by the light diffusion part 13 is passed through and emitted from the first light transmissive emission part 122a. Thus, emission of light from an unnecessary portion in the light guide part 11 is prevented or reduced, and a design displayed in the design display part 12 can be efficiently illuminated. Particularly, brightness of light (brightness of a lightened portion) emitted from the first light transmissive emission part 122a is increased as compared the case of using a conventional display member that emits light from a substantially entire surface of a light guide body, and a design displayed in the design display part 12 can be efficiently illuminated.

Further, the dial direction emission part 24 in the light guide body 20 is arranged substanially parallel to a surface of the inside wall light introduction part 111a provided in an inside wall of the dial hole part 111 of the light guide dial 10, and a thickness of the dial direction emission part 24 is formed to be substantially the same as a thickness of the inside wall light introduction part 111a that is a thickness direction of the light guide dial 10. In such a configuration, it is possible to suppress light leakage when light is transmitted from the light guide body to the light guide dial, and a design can be efficiently illuminated.

Further, the light guide body 20 has the pointer shaft insertion part 25 for inserting the pointer shaft 41. In such a configuration, the dial direction emission part can be provided in substantially all directions, light of the light source can be emitted in substantially all directions of the light guide dial around the dial hole part, and a design can be efficiently illuminated in a wider range.

Further, the light guide body 20 has the dial direction reflection part 22 that reflects light from the first light source 51 to the direction of the dial direction emission part 24, and the pointer direction emission part 23 that emits light to the direction of the pointer 30. In such a configuration, it is possible to share the light source for illuminating the light pointer and the light guide dial, enabling efficient illumination with a less light source.

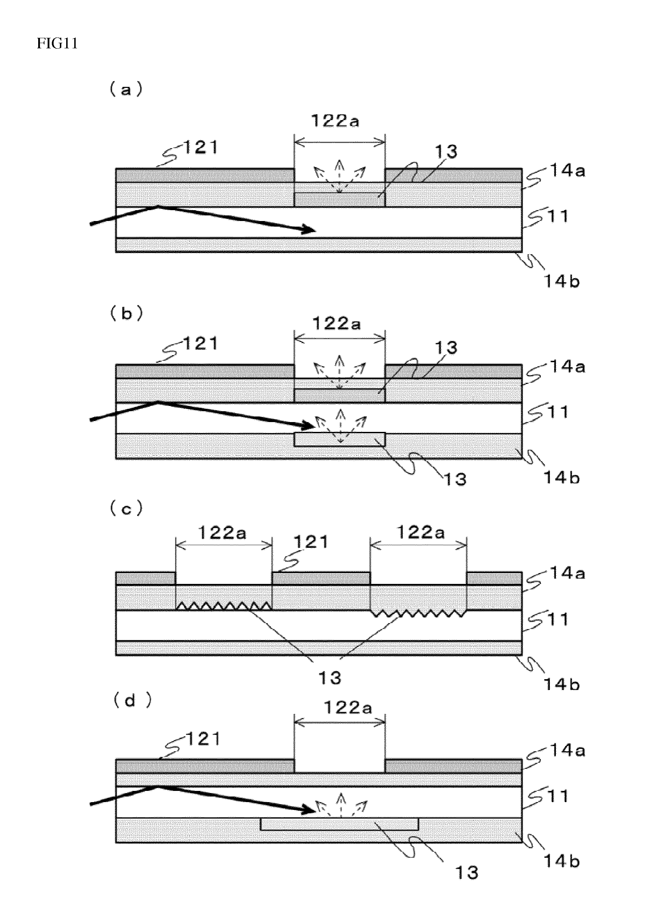

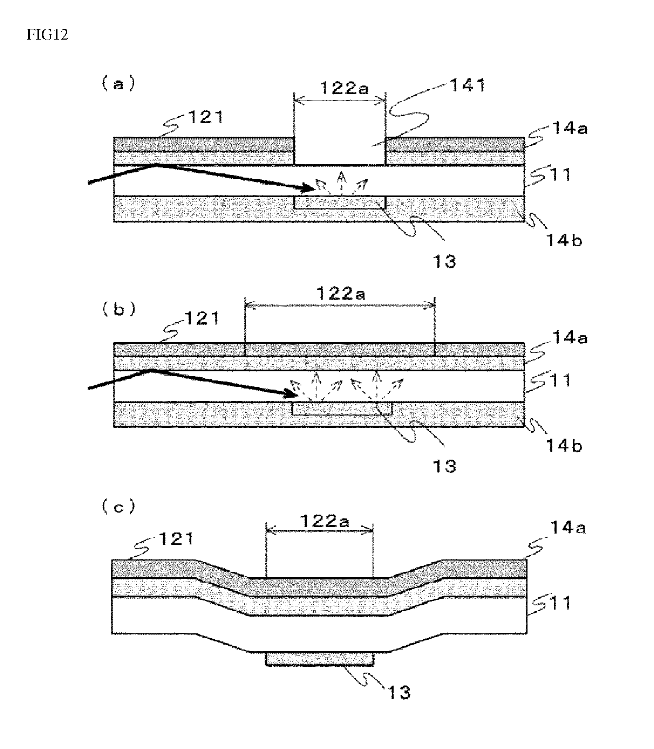

Hereinafter, modification examples of the light guide dial 10 of the embodiment will be explained with reference to Figs. 11 and 12.

The above-mentioned technical items and technical items in the following modification examples may be appropriately combined.

In the above embodiment, the light diffusion part 13 is provided on a back of the light guide part 11. However, the light diffusion part 13 may be disposed in an area corresponding to the first light transmissive emission part 122a, and may be provided on a surface of the light guide part 11 as shown in Fig. 11 (a), or may be provided on both sides of the light guide part 11 as shown in Fig. 11 (b).

In such cases, the light diffusion part 13 is appropriately changed in its diffusion property. For example, when the light diffusion part 13 is formed on a back of the light guide part 11, the light diffusion part 13 diffuses light mainly by reflection, diffused reflection, scattering or the like. When the light diffusion part 13 is formed on a surface of the light guide part 11, the light diffusion part 13 diffuses light mainly by scattering, refraction or the like. Thus, the diffusion property of the light diffusion part 13 is changed by whether to travel a diffused light in a direction of front or back side (or, including both directions).

Further, the light diffusion part 13 may be configured to have a light diffusing property. For example, as shown in Fig. 11 (c), the light diffusion part 13 may be formed by molding a dot pattern or the like consisting of concave and convex portions or the like directly on a surface of the light guide part 11 by microdots, in-print, etching or the like. Or, the light diffusion part 13 may be formed by providing bubbles having a light diffusion property on a surface of the light guide part 11 having light transmissivity. In such cases, the light diffusion part 13 may be provided with the same material as that of the light guide part 11. Otherwise, the light guide part 11 and light diffusion part 13 may be configured by mixing gold powder having a light diffusing property into translucent glass.

Further, as shown in Fig. 11 (d), the light diffusion part 13 may be provided in an area wider than the area corresponding to the first light transmissive emission part 122a. In such a configuration, the amount of light emitted from the first light transmissive emission part 122a is increased, and the first light transmissive emission part 122a is brightly displayed.

In the above embodiment, the front low refractive index part 14a and rear low refractive index part 14b are provided over both sides of the light guide part 11. However, as shown in Fig. 12 (a), a through-hole 141 may be formed in the front low refractive index part 14a at a position where the light diffused by the light diffusion part 13 passes through. In such a manner, the front low refractive index part 14a and rear low refractive index part 14b may be provided in a shape that a position corresponding to the first light transmissive emission part 122a is a through-hole.

Further, in the above embodiment, the non-transmissive part 121 formed in the design display part 12 is a layer having a non-light-transmitting (light-shielding) property, but it may be a layer having light transmissivity (including semi-light-transmissivity). Further, as shown in Fig. 12 (b), the non-transmissive part 121 may be provided so as to cover the first light transmissive emission part 122a. In such cases, in the design display part 12, a portion that transmits the light diffused by the light diffusion part 13 is the first light transmissive emission part 122a. In other words, the first light transmissive emission part 122a may be defined by a shape or the like of the light diffusion part 13. Further, an area of the first light transmissive emission part 122a provided in this case is an area where the light diffused by the light diffusion part 13 reaches and passes through, and the area becomes wider than that the case where the non-transmissive part 121 having a light-shielding property is provided as shown in the above embodiment.

Further, in the above embodiment, the display member 10 is plate-shaped. However, as shown in Fig. 12 (c), the display member may be provided in a three-dimensional shape. For example, the display member 10 can be processed to be a three-dimensional shape by air-pressure molding, drawing molding or the like. A three-dimensional light guide part 11 may be used. A three-dimensional display member 10 may be configured by stacking the design display part 12, light diffusion part 13, and low refractive index part 14 or the like on the three-dimensional light guide part.

### (Second embodiment)

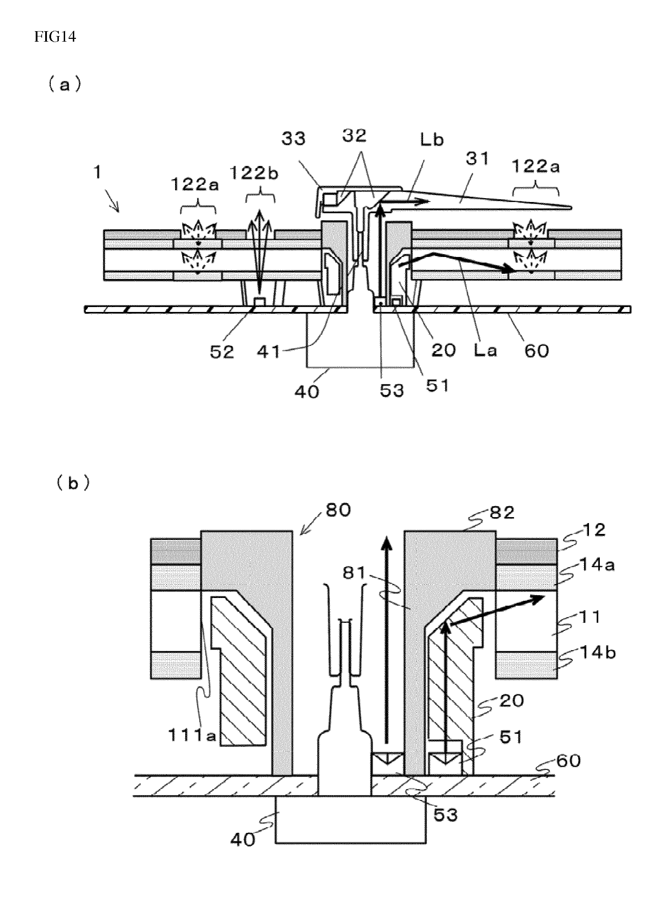

Hereinafter, modification examples of the embodiment will be explained with reference to Fig. 14.

As shown in Fig. 14, a pointer-type display device 1 in the second embodiment further comprises a third light source 53, and a light shielding part 80. The third light source 53 is formed in a top-view type arranged right below the pointer 30. The pointer 30 is lightened by light emitted from the third light source 53. The light shielding part 80 is made of a light-shielding material, and comprises a first light source 51 and a light guide body 20 that illuminate the light guide dial 10, a partition wall part 81 that separates a third light source 53 for illuminating a pointer 30, and an upper wall part 82 that covers an upper surface of the light guide body 20.

In such a configuration, by introducing light from an inside wall light introduction part of a dial hole part of a light guide dial, it is possible to perform elaborate illumination in a space-saving manner while efficiently lightening a design display part 122, and shifting timing of illuminating a design display part 122 and a pointer 30.

### INDUSTRIAL APPLICABILITY

A pointer-type display device according to the present invention can be used as a display device having a pointer to be mounted on a vehicle or the like.

### DESCRIPTION OF REFERENCE NUMERALS

- 1: Pointer-type display device
- 10: Light guide dial
- 11: Light guide part
- 12: Design display part
- 13: Light diffusion part
- 14a: Front low refractive index part
- 14b: Rear low refractive index part
- 20: Light guide body
- 21: Housing part
- 22: Dial direction reflection part
- 22a: Reflection surface diffusion part
- 23: Pointer direction emission part
- 24: Dial direction emission part
- 24a: Emission surface diffusion part
- 25: Pointer shaft insertion part
- 30: Pointer
- 31: Pointing portion
- 32: Pointer base portion
- 33: Pointer cap
- 40: Main body
- 41: Pointer shaft
- 50: Light source
- 51: First light source
- 52: Second light source
- 53: Third light source
- 60: Circuit board
- 70: Inside case
- 80: Light shielding part
- 81: Partition wall part
- 82: Upper wall part
- 111: Dial hole part
- 111a: Inside wall light introduction part
- 121: Non-transmissive part
- 122: Transmissive part
- 122a: First light transmissive emission part
- 122b: Second light transmissive emission part

## Claims

1. A pointer-type display device comprising:
a pointer;
a first light source arranged around the pointer; and
a light guide dial comprising a translucent light guide part, which is provided with a dial hole part for inserting a shaft of the pointer, and guides light of the first light source; a design display part that displays a design on at least one of a front surface and a rear surface of the light guide part; and a light diffusion part, which is formed on at least one of a front surface and a rear surface of the light guide part, and diffuses light guided by the light guide part; the design display part provided with a first light transmissive emission part that transmits and emits light diffused by the light diffusion part, and the light diffusion part is provided corresponding to the first light transmissive emission part,
wherein a light guide body, which causes light to be introduced from the first light source into an inside wall light introduction part disposed in an inside wall of the dial hole part of the light guide dial, is provided.

2. The pointer-type display device according to claim 1, wherein
the light guide body is provided with a dial direction emission part that emits light from the first light source and that opposed substantially parallel to the inside wall light introduction part, and
a thickness of the dial direction emission part that is a height direction of the light guide body is substantially the same as a thickness of the inside wall light introduction part.

3. The pointer-type display device according to claim 1 or claim 2, wherein the light guide body comprises a pointer shaft insertion part for inserting a shaft of the pointer, and the dial direction emission part is arranged opposite to substantially entire circumference of the inside wall light introduction part.

4. The pointer-type display device according to any one of claims 1 to 3, wherein the light guide body comprises a dial direction reflection part that reflects light from the first light source to the direction of the dial direction emission part, and a pointer direction emission part that emits the light to the direction of the pointer.

5. The pointer-type display device according to any one of claims 1 to 4, wherein the dial direction emission part comprises a dial direction diffusion part for diffusing light.

6. The pointer-type display device according to claim 5, wherein the light guide plate direction diffusion part is formed by a V-shaped groove.

7. The pointer-type display device according to any one of claims 1 to 6, further comprising a second light source, and a second light transmissive emission part, which is provided in an area of the light guide dial except the dial hole part, and transmits and emits light emitted from the second light source from a rear surface side of the light guide dial to a front surface side of the light guide dial,
wherein the second light source is provided on a rear surface side of the light guide dial, opposite to the second light transmissive emission part.

8. A pointer-type display device comprising:
a pointer;
a first light source arranged around the pointer;
a third light source that illuminates the pointer from behind; and
a light guide dial comprising a translucent light guide part, which is provided with a dial hole part for inserting a shaft of the pointer, and guides light of the first light source; a design display part that displays a design on at least one of a front surface and a rear surface of the light guide part; and a light diffusion part, which is formed on at least one of a front surface and a rear surface of the light guide part, and diffuses light guided by the light guide part, the design display part provided with a first light transmissive emission part that transmits and emits light diffused by the light diffusion part, and the light diffusion part provided with a light guide dial that is provided corresponding to the first light transmissive emission part,
a light guide body, which to be introduced light from the first light source into an inside wall light introduction part disposed in an inside wall of the dial hole part of the light guide dial,
a partition wall part that separates the third light source from the first light source and the light guide body, and
an upper wall part that covers an upper side of the light guide body.

9. The pointer-type display device according to claim 8, wherein the light guide body is provided with a dial direction emission part that emits the light from the first light source and that opposed substantially parallel to the inside wall light introduction part, and
a thickness of the dial direction emission part that is a height direction of the light guide body is substantially the same as a thickness of the inside wall light introduction part.

10. The pointer-type display device according to claim 8 or claim 9, wherein the light guide body comprises a pointer shaft insertion part for inserting a shaft of the pointer, and the dial direction emission part is arranged opposite to substantially entire circumference of the inside wall light introduction part.

11. The pointer-type display device according to any one of claims 8 to 10, further comprising a second light source, and a second light transmissive emission part, which is provided in an area of the light guide dial except the dial hole part, and transmits and emits light emitted from the second light source from a rear surface side of the light guide dial to a front surface side of the light guide dial,
wherein the second light source is provided on a rear surface side of the light guide dial, opposite to the second light transmissive emission part.
